# EUROPÄISCHE PATENTSCHRIFT

(11) **EP 0 870 531 B1**
(45) Veröffentlichungstag und Bekanntmachung des Hinweises auf die Patenterteilung: **12.05.2004**
(21) Anmeldenummer: 98104977.8
(22) Anmeldetag: 19.03.1998
(51) Int. Cl.: B01D 53/94, B01J 23/02, B01J 23/58, B01J 23/78, B01J 23/63

(54) **Autoabgaskatalysator**
Vehicle exhaust gas catalysts
Catalysateur de gaz d'échappement de véhicule

(30) Priorität: 09.04.1997 DE 19714536
(43) Veröffentlichungstag der Anmeldung: 14.10.1998
(73) Patentinhaber: Umicore AG & Co. KG, 63457 Hanau-Wolfgang (DE)
(72) Erfinder: Lindner, Dieter, Dr., 63457 Hanau (DE); Mussmann, Lothar, Dr., 63067 Offenbach (DE); van Yperen, Renee, Dr., 3632 XC Loenen a/d Vecht (NL); Kreuzer, Thomas, Dr., 61184 Karben (DE); Lox, Egbert, Dr., 63457 Hanau (DE)
(74) Vertreter: Stellbrink, Axel

(56) Entgegenhaltungen:
- EP-A- 0 337 809
- EP-A- 0 507 590
- US-A- 4 624 940
- US-A- 4 965 243

## Beschreibung

Die vorliegende Erfindung betrifft einen Autoabgaskatalysator, welcher auf einem inerten Tragkörper eine einschichtige, katalytisch aktive Beschichtung aus hochoberflächigen Trägeroxiden aufweist, wobei die Beschichtung als einziges katalytisch aktives Edelmetall Palladium enthält.

Verbrennungskraftmaschinen emittieren als wesentliche Schadstoffe mit dem Abgas Kohlenmonoxid CO, unverbrannte Kohlenwasserstoffe HC und Stickoxide NOₓ, die durch moderne Abgasreinigungskatalysatoren zu einem hohen Prozentsatz in die unschädlichen Komponenten Wasser, Kohlendioxid und Stickstoff umgesetzt werden. Die Umsetzung erfolgt im wesentlichen bei stöchiometrischen Bedingungen, das heißt, der im Abgas enthaltene Sauerstoff wird mit Hilfe einer sogenannten Lambda-Sonde so eingeregelt, daß die Oxidation von Kohlenmonoxid und Kohlenwasserstoffen sowie die Reduktion der Stickoxide zu Stickstoff nahezu quantitativ erfolgen kann. Die hierfür entwickelten Katalysatoren werden als Dreiwegkatalysatoren bezeichnet.

Stöchiometrische Bedingungen liegen bei Luftzahlen λ von 1 vor. Bei der Luftzahl λ handelt es sich um das auf stöchiometrische Bedingungen normierte Luft/Kraftstoffverhältnis. Das Luft/Kraftstoffverhältnis gibt an, wieviel Kilogramm Luft für die vollständige Verbrennung von einem Kilogramm Treibstoff benötigt werden. Bei üblichen Ottomotor-Kraftstoffen liegt das stöchiometrische Luft/Kraftstoffverhältnis bei einem Wert von 14,6. Das Motorabgas weist je nach Last und Drehzahl mehr oder weniger starke periodische Schwankungen der Luftzahl auf. Zur besseren Umsetzung der oxidierbaren Schadstoffkomponenten unter diesen Bedingungen werden Sauerstoffspeicherkomponenten wie zum Beispiel Ceroxid eingesetzt, die Sauerstoff binden, wenn er im Überschuß vorhanden ist und ihn für die oxidative Umsetzung wieder abgeben, wenn der Sauerstoff im Abgas im Unterschuß vorliegt.

Die zukünftigen Abgasgrenzwerte für Verbrennungskraftmaschinen fordern eine immer stärkere Verminderung der Schadstoffemissionen über normierte Fahrzyklen. Beim heutigen Stand der Abgasreinigung werden die noch verbliebenen Schadstoffemissionen während des Kaltstarts verursacht. Eine wesentlich verbesserte Schadstoffumsetzung über einen ganzen Fahrzyklus ist daher nur noch durch Verminderung der Kaltstartemissionen möglich. Dies kann zum Beispiel durch einen Katalysator mit einer möglichst niedrigen Anspringtemperatur für die Schadstoffumsetzungen und/oder durch Plazierung des Katalysators dicht hinter dem Abgasauslaß des Motors erreicht werden, um die Aufheizzeit bis zum Erreichen der Betriebstemperatur des Katalysators zu vermindern.

Bei motornahem Einbau des Katalysators wird er während des Dauerbetriebs des Motors und während Vollast mit Abgastemperaturen von bis zu 1100°C belastet. Für dieses Einsatzgebiet werden also temperaturbeständige und langzeitstabile Katalysatoren benötigt.

Die vorliegende Erfindung befaßt sich mit Katalysatorbeschichtungen auf inerten, monolithischen Trägern, gewöhnlich Wabenkörpern mit parallelen Strömungskanälen für das Abgas. Die Anzahl der Strömungskanäle pro Querschnittsfläche wird als Zelldichte bezeichnet. Je nach Anwendungserfordernis kommen inerte Träger mit Zelldichten zwischen 10 und 250 cm⁻² zum Einsatz. Es kann sich dabei um extrudierte, keramische Träger aus Cordierit, Mullit oder ähnlichen, temperaturbeständigen Materialien handeln. Alternativ werden Wabenkörper aus Stahlfolien verwendet.

Die katalytische Beschichtung enthält als katalytisch aktive Komponenten zumeist mehrere Edelmetalle der Platingruppe des periodischen Systems der Elemente, die in hochdisperser Form auf der spezifischen Oberfläche von hochoberflächigen Trägermaterialien abgeschieden sind. Die Beschichtung enthält darüber hinaus noch weitere Komponenten wie Sauerstoffspeichermaterialien, Promotoren und Stabilisatoren. Die Beschichtung wird unter Verwendung einer wäßrigen Beschichtungsdispersion, welche die verschiedenen Komponenten des Katalysators enthält, durch bekannte Beschichtungsverfahren auf die Innenwände der Strömungskanäle aufgebracht.

Die inerten monolithischen Träger werden im Rahmen dieser Erfindung auch als Tragkörper bezeichnet, um sie besser von den hochoberflächigen Trägermaterialien für die katalytisch aktiven Komponenten unterscheiden zu können. Als hochoberflächig gelten Materialien, deren spezifische Oberfläche, auch BET-Oberfläche (gemessen nach DIN 66132), wenigsten 10 m²/g beträgt. Sogenannte aktive Aluminiumoxide erfüllen diese Bedingung. Es handelt sich dabei um feinteilige Aluminiumoxide, welche die Kristallstrukturen der sogenannten Übergangsphasen des Aluminiumoxids aufweisen. Hierzu gehören chi-, delta-, gamma-, kappa-, theta- und eta-Aluminiumoxid.

Die Komponenten des Katalysators können in verschiedener Form der Beschichtungsdispersion zugefügt werden:
a)als "feinteilige Feststoffe"
   Hierunter werden pulverförmige Materialien mit Korngrößen zwischen 1 und etwa 50 µm verstanden. In der englischsprachigen Literatur werden hierfür die Ausdrücke "bulk material" oder "particulate material" verwendet.
b)als "kolloidale Feststoffe"
   Sie weisen Teilchengrößen von weniger als 1 µm auf. Die teilchenförmige Struktur der feinteiligen und der kolloidalen Feststoffe bleibt auch in der fertigen Katalysatorbeschichtung erhalten.
c)in Form löslicher "Vorläuferverbindungen"
   Die Vorläuferverbindungen werden erst durch eine abschließende Kalzinierung und gegebenenfalls Reduktion in die eigentlichen Komponenten des Katalysators überführt und liegen dann in hochdisperser Form vor.

Die katalytisch aktiven Metalle der Platingruppe oder Stabilisatoren wie Lanthanoxid und Bariumoxid werden bevorzugt als lösliche Vorläuferverbindungen in die Beschichtungsdispersion oder erst nachträglich in die Beschichtung durch Imprägnieren eingebracht. Nach einer abschließenden Kalzinierung liegen diese Materialien in hochdisperser Form (Kristallitgrößen im allgemeinen kleiner als 5-10 nm) auf der spezifischen Oberfläche der hochoberflächigen, feinteiligen Komponenten des Katalysators vor. Sie werden im Rahmen dieser Erfindung daher auch als "hochdisperse Materialien" bezeichnet.

Ziel der vorliegenden Erfindung ist es, einen für das obige Einsatzgebiet geeigneten Katalysator zu entwickeln, der ausschließlich mit Palladium als katalytisch aktiver Edelmetallkomponente arbeitet. Palladium zeichnet sich gegenüber Platin durch einen geringeren Preis aus, was für die Wirtschaftlichkeit des Katalysators von Bedeutung ist. Darüber hinaus ist bekannt, daß Palladium ein sehr effektiver Katalysator für die Oxidation von unverbrannten Kohlenwasserstoffen, insbesondere von Paraffinen und Aromaten, ist. Es übertrifft, bezogen auf die gleiche Masse, die Wirkung von Platin.

Die US 4,624,940 beschreibt einen Dreiwegkatalysator in Form einer Beschichtung auf einem monolithischen Tragkörper, welcher nur Palladium als katalytisch aktive Komponente enthält und welcher seine katalytische Aktivität auch noch nach Alterung bei Temperaturen über 1000°C beibehält. Die Beschichtung enthält wenigstens drei verschiedene, feinteilige Stoffe: thermisch stabiles Aluminiumoxid als Trägermaterial für ein Metall der Platingruppe, weitere Metalloxide als Promotoren, welche frei von Metallen der Platingruppe sind, sowie inertes, thermisch stabiles Füllmaterial. Das Trägermaterial ist mit Lanthan, Barium und Silizium stabilisiert. Das zur Stabilisierung verwendete Lanthanoxid kann bis zu 10 Gew.-% Praseodymoxid enthalten. Als Promotoren werden Ceroxid, Zirkonoxid oder Mischungen hiervon verwendet. Als Füllmaterial kommen feinteiliges Cordierit, Mullit, Magnesium-Aluminiumtitanat und Mischungen davon zum Einsatz. Bevorzugt wird als Metall der Platingruppe Palladium eingesetzt. Gemäß der US 4,624,940 ist darauf zu achten, daß Palladium nicht auf den ceroxidhaltigen Promotoren abgeschieden wird, da dies sowohl die Effektivität des Palladiums als auch des Promotors verschlechtern würde.

Die US 5,057,483 beschreibt eine Katalysatorzusammensetzung, welche aus zwei diskreten Schichten auf einem monolithischen Tragkörper besteht. Die erste Schicht enthält ein stabilisiertes Aluminiumoxid als Trägermaterial für Platin sowie feinteiliges Ceroxid. Die erste Schicht kann außerdem feinteiliges Eisenoxid und Nickeloxid zur Unterdrückung der Emission von Schwefelwasserstoff enthalten sowie über die ganze Schicht verteiltes, hochdisperses Bariumoxid und Zirkonoxid als thermische Stabilisatoren. Die zweite Schicht enthält ein co-gefälltes Cer/Zirkon-Mischoxid, auf dem Rhodium abgeschieden ist sowie ein aktiviertes Aluminiumoxid als Trägermaterial für Platin. Das co-gefällte Cer/Zirkon-Mischoxid enthält bevorzugt 2 bis 30 Gew.-% Ceroxid.

Die US 4,294,726 beschreibt eine einschichtige Katalysatorzusammensetzung auf einem inerten Tragkörper, welche als katalytisch aktive Komponenten Platin, Rhodium und Unedelmetalle aufweist, die auf einem aktiven Aluminiumoxid abgeschieden sind. Das aktive Aluminiumoxid enthält Ceroxid, Zirkonoxid und Eisenoxid. Der Katalysator wird erhalten durch Imprägnieren des aktiven Aluminiumoxids mit einer wäßrigen Lösung von Cer-, Zirkon- und Eisensalzen. Nach Kalzinieren des so behandelten Aluminiumoxids wird es ein weiteres Mal mit einer wäßrigen Lösung von Platin- und Rhodiumsalzen imprägniert.

Die US 4,965,243 beschreibt ebenfalls einen einschichtigen, temperaturstabilen Dreiweg-Katalysator auf einem monolithischen Tragkörper, welcher erhalten wird durch Beschichten des Tragkörpers mit einer Beschichtungsdispersion, welche ein Metall der Platingruppe, aktives Aluminiumoxid, Ceroxid, eine Bariumverbindung und eine Zirkonverbindung enthält.

Die WO 95/00235 beschreibt einen zweischichtigen Katalysator auf einem inerten Tragkörper, der als katalytisch aktive Komponente nur Palladium enthält. Die erste Schicht enthält ein erstes Trägermaterial und wenigstens eine erste Palladiumkomponente sowie eine erste Sauerstoffspeicherkomponente, welche in innigem Kontakt mit der Palladiumkomponente steht. Die zweite Schicht enthält ein zweites Trägermaterial und wenigstens eine zweite Palladiumkomponente. Als erstes Trägermaterial wird ein aktives γ-Aluminiumoxid verwendet, auf dem Palladium durch Imprägnieren mit einer wäßrigen Palladiumnitratlösung abgeschieden wird. Das so erhaltene Aluminiumoxid wird mit einer kolloidalen Dispersion von Ceroxid (Teilchengröße etwa 10 nm), Cernitratkristallen, Lanthannitratkristallen, Bariumacetatkristallen, einer Zirkonacetatlösung, einem Cer/Zirkon-Mischoxidpulver und einem Nickeloxidpulver zu einer Beschichtungsdispersion für die erste Schicht verarbeitet. Für die zweite Schicht wird eine Beschichtungsdispersion angefertigt, die wie für die erste Schicht mit Palladium beschichtetes Aluminiumoxid sowie Lanthannitratkristalle, Neodymnitratkristalle, Zirkonnitratkristalle und Strontiumnitratkristalle enthält. Nach jeder Beschichtung wird der Tragkörper bei 450°C kalziniert, um die Vorläuferverbindungen der verschiedenen Beschichtungskomponenten in die entsprechenden Oxide zu überführen.

Die EP 0 337 809 A2 beschreibt einen Katalysator für die Abgasreinigung, welcher in Form einer Beschichtung auf einem Wabenkörper aufgebracht ist. Die Beschichtung enthält mit Zirkonoxid oder mit Zirkonoxid und Yttriumoxid und/oder Calciumoxid stabilisiertes Ceroxid, feuerfeste anorganische Oxidpartikel, 0,02 bis 2 Gew.-% Rhodium und gegebenenfalls bis zu 10 Gew.-% Platin und/oder Palladium.

Die EP 0 507 590 A1 beschreibt einen weiteren Katalysator, der in Form einer Beschichtung auf einem Monolithen aufgebracht ist. Die Beschichtung enthält Palladium, ein Erdalkalimetall, Ceroxid, Zirkonoxid und aktives Aluminiumoxid. Das Palladium ist entweder selektiv oder gemeinsam auf dem Zirkonoxid, dem Ceroxid und dem aktiven Aluminiumoxid abgeschieden.

Aufgabe der vorliegenden Erfindung ist es, einen nur Palladium enthaltenden Katalysator anzugeben, welcher besonders kostengünstig hergestellt werden kann und neben guten Umsetzungsgraden für Kohlenwasserstoffe, Kohlenmonoxid und Stickoxide eine ausgezeichnete Temperatur- und Alterungsbeständigkeit aufweist.

Diese Aufgabe wird durch einen Autoabgaskatalysator gelöst, welcher auf einem Tragkörper eine einschichtige, katalytische Beschichtung aus den folgenden Komponenten enthält:
a) feinteiliges, stabilisiertes, aktives Aluminiumoxid mit einer Korngröße zwischen 1 und etwa 50µm,
b) mindestens eine feinteilige Sauerstoff speichernde Komponente mit einer Korngröße zwischen 1 und etwa 50µm,
c) gegebenenfalls feinteiliges Nickeloxid
d) sowie zusätzliches, hochdisperses Ceroxid, Zirkonoxid und Bariumoxid mit einer Kristallitgröße kleiner als 10nm und
e) als einziges katalytisch aktives Edelmetall Palladium, welches mit allen Komponenten der Beschichtung in engem Kontakt steht, wobei der Autoabgaskatalysator erhältlich ist durch ein Verfahren umfassend Beschichten des inerten Tragkörpers mit einer wäßrigen Beschichtungsdispersion aus feinteiligem Aluminiumoxid, den feinteiligen Sauerstoff speichernden Komponenten sowie löslichen Ceroxid-, Zirkonoxid- und Bariumoxidvorstufen, Trocknen und ggf. erstmaliges Kalzinieren der Beschichtung und anschließendes Imprägnieren mit löslichen Vorstufen des Palladiums sowie erneutes Trocknen und abschließendes Kalzinieren,
   oder wobei der Autoabgaskatalysator erhältlich ist durch ein Verfahren umfassend die folgenden Verfahrensstufen:
   a) Anfertigen eines Beschichtungspulvers durch Ansetzen einer wäßrigen Dispersion aus feinteiligem Aluminiumoxid, den feinteiligen Sauerstoff speichernden Komponenten sowie löslichem Ceroxid-, Zirkonoxid- und Bariumoxidyorstufen, Entwässern der Dispersion, Trocknen und ggf. erstmaliges Kalzinieren der so erhaltenen Feststoffe,
   b) Herstellen einer wäßrigen Beschichtungsdispersion aus dem Beschichtungspulver von Stufe a), Zugeben einer gelösten Vorstufe von Palladium und Beschichten des inerten Tragkörpers mit dieser Dispersion,
   c) Trocknen und abschließendes Kalzinieren.

Bevorzugt wird für den Katalysator mit Lanthan stabilisiertes, γ-Aluminiumoxid mit einer spezifischen Oberfläche von mehr als 100 m²/g verwendet. Zur Stabilisierung sind 2 bis 4 Gew.-% Lanthanoxid, welches zum Beispiel in bekannter Weise durch Imprägnieren in das Aluminiumoxid eingebracht werden kann, ausreichend.

Als Sauerstoff speichernde Komponente wird bevorzugt ein Cer/Zirkon-Mischoxid verwendet, welches zum Beispiel durch Co-Präzipitation, wie in der EP 0605274 A1 beschrieben, gewonnen werden kann. Bevorzugt enthält das Material bezogen auf sein Gesamtgewicht 15 bis 35 Gew.-% Zirkonoxid. Bei Anteilen von Zirkonoxid unter 15 Gew.-% ist die Alterungsbeständigkeit des Materials nicht mehr ausreichend. Wegen seines hohen Ceroxidgehaltes weist dieses Material eine hervorragende Sauerstoffspeicherfähigkeit auf.

Sind bei der Anwendung des Katalysators sehr hohe Temperaturen bis 1100°C zu erwarten, so empfiehlt es sich, das genannte Mischoxid durch ein zirkonreicheres Cer/Zirkon-Mischoxid mit 70 bis 90 Gew.-% Zirkonoxid ganz oder teilweise zu ersetzen. Wegen seines hohen Zirkonoxidgehaltes ist dieses Material besonders temperaturbeständig, besitzt jedoch im Frischzustand eine geringere Sauerstoffspeicherfähigkeit.

Alternativ hierzu kann auch ein Material eingesetzt werden, welches Ceroxid in hochdisperser Form auf feinteiligem Zirkonoxid aufweist. Das hochdisperse Ceroxid kann durch Imprägnieren und anschließendes Kalzinieren auf dem Zirkonoxid fixiert werden. Dieses Material besitzt auch schon bei einem Gehalt an Ceroxid von nur 10 bis 30 Gew.-% eine ausreichende Sauerstoffspeicherkapazität. Besonders vorteilhaft sind auch hochdisperse Mischungen von Ceroxid und Praseodymoxid auf Zirkonoxid, wobei bezogen auf Ceroxid 1 bis 20 Gew.-% Praseodymoxid vorliegen.

Eine weitere feinteilige Sauerstoffspeicherkomponente, welche sich durch eine besonders gute Alterungsstabilität auszeichnet, wird durch Imprägnieren des oben angeführten cerreichen Cer/Zirkon-Mischoxids mit 1 bis 10 Gew.-% Praseodymoxid, bezogen auf das Gesamtgewicht der fertigen Komponente erhalten.

Bevorzugt wird im Katalysator ein Massenverhältnis zwischen aktivem Aluminiumoxid, den Sauerstoff speichernden Komponenten sowie dem zusätzlichen, hochdispersen Ceroxid, Zirkonoxid, Bariumoxid und dem feinteiligen Nickeloxid von
100 : 20-100 : 15-40 : 20-40 : 10-30 : 0-10 eingestellt.

Optimale Anspringtemperaturen und Aktivitäten des Katalysators werden erzielt, wenn die Beschichtungsmenge des Katalysators auf dem Tragkörper zwischen 50 und 600 g/l Tragkörpervolumen beträgt und die Palladiumkonzentration zwischen 1 und 15, bevorzugt bei 2 bis 5 g/l Tragkörpervolumen, liegt.

Die tatsächlich verwendete Beschichtungsmenge auf dem Tragkörper hängt von den Anforderungen an Schadstoffumsatz und Langzeitstabilität, sowie von der Zelldichte der Wabenkörper ab. Bevorzugt werden mittlere Schichtdicken von etwa 30 bis 50 µm auf den Kanalwänden angestrebt. Je nach Zelldichte liegt die hierfür benötigte Beschichtungsmenge bei 50 bis 600 g/l Tragkörpervolumen, wobei der obere Wert für Tragkörper mit Zelldichten von 250 cm⁻² angewendet wird. Je größer die Beschichtungsmenge auf einem vorgegebenen Tragkörper ist, um so größer ist die Gefahr, daß der Abgasgegendruck infolge verengter Strömungskanäle übermäßig ansteigt und damit die Leistung des Motors vermindert. Dieser Effekt begrenzt die sinnvoll aufzubringende Beschichtungsmenge auf einen maximalen Wert.

Zur Herstellung des Katalysators wird eine wäßrige Beschichtungsdispersion angefertigt, indem das aktive Aluminiumoxid, die Sauerstoff speichernden Komponenten und gegebenenfalls das Nickeloxid in Pulverform in Wasser unter Zugabe von löslichen Ceroxid-, Zirkonoxid- und Bariumoxidvorstufen dispergiert werden. Mit dieser Beschichtungsdispersion werden die Innenwände der Strömungskanäle eines wabenförmigen Tragkörpers aus Keramik oder Metall zum Beispiel durch Tauchen beschichtet. Bei Tragkörpern aus Metallfolienbändern können die Folien auch schon vor der Formung des Tragkörpers auf die Bänder aufgebracht werden.

Nach Trocknen und ggf. erstmaligen Kalzinieren der Beschichtung wird das Palladium auf allen Komponenten der Beschichtung in hochdisperser Form durch Tauchen des Tragkörpers in eine wäßrige Imprägnierlösung aus löslichen Vorstufen des Palladiums abgeschieden.

Alternativ zu dieser Vorgehensweise besteht auch die Möglichkeit zunächst ein alle Komponenten des Katalysators enthaltendes Beschichtungspulver anzufertigen. Hierzu wird eine wäßrige Dispersion aus pulverförmigem Aluminiumoxid, den Sauerstoff speichernden Komponenten und gegebenenfalls Nickeloxid sowie aus löslichen Ceroxid-, Zirkonoxid- und Bariumoxidvorstufen angefertigt. Die Dispersion wird entwässert, getrocknet und ggf. erstmalig kalziniert. Das so erhaltene Beschichtungspulver wird unter Zusatz einer Palladiumvorstufe redispergiert und auf die Innenwände des Tragkörpers mit bekannten Verfahren aufgebracht. Die so erhaltene Beschichtung wird anschließend getrocknet und kalziniert. Die Kalzinierung kann optional in einem Wasserstoff enthaltenden Gasstrom (zum Beispiel Formiergas aus 5 Vol.-% Wasserstoff, Rest Stickstoff) zur Reduktion des Palladiums vorgenommen werden.

Die beiden alternativen Herstellverfahren für den Katalysator gewährleisten durch die Art der Einbringung des Palladiums den geforderten engen Kontakt des Palladiums mit allen anderen Komponenten des Katalysators.

Als lösliche Vorstufen von Ceroxid, Zirkonoxid und Bariumoxid eignen sich Nitrate, Ammoniumnitrate, Chloride, Oxalate, Acetate, Citrate, Formiate, Propionate, Thiocyanate und Oxichloride von Cer, Zirkon und Barium. Bevorzugt werden Nitrate und Acetate eingesetzt. Als Vorstufen des Palladiums eignen sich verschiedene Palladiumsalze. Bevorzugt wird auch hier Palladiumnitrat verwendet.

Die bei der Herstellung des Katalysators zur Anwendung kommenden Trocknungsschritte sind unkritisch. Sie können an Luft im Temperaturbereich zwischen 100 und 180°C für die Dauer von 0,25 bis 2 Stunden durchgeführt werden. Die Kalzinierung erfolgt bevorzugt bei Temperaturen zwischen 300 und 800°C für die Dauer von 0,5 bis 3 Stunden.

Zur Homogenisierung der Beschichtungsdispersion wird diese gewöhnlich in einer Kugelmühle vermahlen, bis eine mittlere Korngröße d₅₀ der verwendeten feinteiligen Materialien von 1 bis 5, bevorzugt 3 bis 5 µm, erreicht ist (Unter d₅₀ wird derjenige Korndurchmesser verstanden, der größer oder gleich dem Durchmesser von 50 Gew.-% des Materials ist.). Zur Verbesserung der Abgasverwirbelung in den Strömungskanälen kann der Beschichtungsdispersion nach der Homogenisierung, wie in der US 5,496,788 beschrieben, ein grobteiliges aber hochoberflächiges Material zugefügt werden. Hierdurch wird die Oberfläche der fertigen Beschichtung aufgerauht und eine Verwirbelung des Abgases und damit eine Verbesserung des Stoffaustausches zwischen Abgas und Katalysatorbeschichtung bewirkt.

Je nach Konsistenz der Beschichtungsdispersion kann die notwendige Beschichtungsmenge zum Beispiel durch ein- oder mehrmaliges Tauchen auf den Tragkörper aufgezogen werden. Bevorzugt wird die Feststoffkonzentration und Viskosität der Beschichtungsdispersion so eingestellt, daß die gewünschte Beschichtungsmenge in einem einmaligen Beschichtungsvorgang aufgebracht werden kann. Dies ist zum Beispiel bei einem Feststoffgehalt der Beschichtungsdispersion von 30 bis 70 Gew.-% und Dichten von 1,4 bis 1,8 kg/dm³ der Fall.

Für die zur weiteren Erläuterung der Erfindung angefertigten Katalysatoren der untenstehenden Beispiele und Vergleichsbeispiele wurden Rohstoffe mit folgenden Eigenschaften verwendet:
- **La/Al**_{**2**}**O**_{**3**}**:**: γ-Aluminiumoxid, stabilisiert mit 2 bis 4 Gew.-% Lanthan, berechnet als Lanthanoxid; BET-Oberfläche: 140 m²/g;
anfängliche Korngröße: d₅₀ ≈ 15 µm;
- **γ-Al**_{**2**}**O**_{**3**}**:**: reines gamma-Aluminiumoxid;
BET-Oberfläche: 140 m²/g;
anfängliche Korngröße: d₅₀ ≈ 15 µm;
- **CeO**_{**2**}**/ZrO**_{**2**} **(70/30):**: co-gefälltes Cer/Zirkon-Mischoxid;
Gehalt an Zirkonoxid: 30 Gew.-%; BET-Oberfläche: 60 m²/g;
anfängliche Korngröße: d₅₀ ≈ 30 µm;
- **CeO**_{**2**}**/ZrO**_{**2**} **(20/80):**: co-gefälltes Cer/Zirkon-Mischoxid;
Gehalt an Zirkonoxid: 80 Gew.-%;
BET-Oberfläche: 80 m²/g; anfängliche Korngröße: d₅₀ ≈ 2 µm;
- **CeO**_{**2**}**/ZrO**_{**2**}**/Pr**_{**6**}**O**_{**11**}**:**: hochdisperses Pr₆O₁₁ auf Cer/Zirkon-Mischoxid mit 67 Gew.-% Ceroxid, 28 Gew.-% Zirkonoxid und
5 Gew.-% Praseodymoxid;
BET-Oberfläche: 60 m²/g;
anfängliche Korngröße: d₅₀ ≈ 17 µm;
- **Ce (C**_{**2**}**H**_{**3**}**O**_{**2**}**)**_{**3**}**:**: Ceracetat
- **ZrO(C**_{**2**}**H**_{**3**}**O**_{**2**}**)**_{**2**}**:**: Zirkonylacetat
- **Ba(C**_{**2**}**H**_{**3**}**O**_{**2**}**)**_{**2**}**:**: Bariumacetat
- **NiO:**: Nickeloxid;
BET-Oberfläche: 20 m²/g;
anfängliche Korngröße: d₅₀ ≈ 14 µm;
- **Tragkörper:**: Wabenkörper aus Cordierit mit 62 Kanälen pro Quadratzentimeter Querschnittsfläche;
Abmessungen: 3,8 cm Durchmesser; 15,2 cm Länge

### Beispiel 1:

Zur Beschichtung des Tragkörpers wurde eine Beschichtungsdispersion angesetzt, welche pro 1000 g stabilisiertes Aluminiumoxid, 300 g Cer/Zirkon-Mischoxid, 300 g Ceroxid als Ceracetat, 300 g Zirkonoxid als Zirkonacetat, 200 g Bariumoxid als Bariumacetat und 43 g Nickeloxid enthielt. Die fertige Beschichtungsdispersion wies einen Feststoffgehalt von 34 Gew.-% auf.

Der Tragkörper wurde durch einmaliges Tauchen in diese Beschichtungsdispersion beschichtet, bei 120°C 0,5 h lang an Luft getrocknet und für die Dauer von 4 h bei 500°C an Luft kalziniert. Danach wurde die Beschichtung durch Tauchen des Tragkörpers in eine wäßrige Lösung von Palladiumnitrat imprägniert, erneut getrocknet und kalziniert. Nach dem Trocknen und Kalzinieren wies der Tragkörper eine Beschichtungskonzentration von ca. 218 g/l auf, die sich wie folgt zusammensetzte:

| Stoff | Konzentration [g/l] |
|---|---|
| La/Al₂O₃ | 100 |
| CeO₂/ZrO₂ 70/30 | 30 |
| CeO₂ ex Acetat | 30 |
| ZrO₂ ex Acetat | 30 |
| BaO ex Acetat | 20 |
| NiO | 4,3 |
| Pd ex Nitrat | 3,9 |
| Summe | 218,2 |

### Vergleichsbeispiel 1:

Es wurde ein Vergleichskatalysator mit derselben chemischen Zusammensetzung wie von Beispiel 1 angefertigt. Im Unterschied zu Beispiel 1 wurde das Palladium jedoch vor Anfertigen der Beschichtungsdispersion auf dem Aluminiumoxid vorfixiert. Hierzu wurden 1000 g des Aluminiumoxids nach der Methode der Porenvolumenimprägnierung mit einer wäßrigen Lösung von Palladiumnitrat behandelt, welche 39 g Palladium enthielt. Hierdurch wurde die gesamte Menge des Palladiums auf dem Aluminiumoxid fixiert.

### Vergleichsbeispiel 2:

Es wurde ein weiterer Vergleichskatalysator mit der chemischen Zusammensetzung des Katalysators von Beispiel 1 angefertigt. Im Unterschied zu Beispiel 1 und Vergleichsbeispiel 1 wurde das Palladium hälftig auf dem Cer/Zirkon-Mischoxid und auf dem Aluminiumoxid vorfixiert.

### Anwendungsbeispiel 1:

Die Umsetzungsraten der Katalysatoren nach Beispiel 1, Vergleichsbeispiel 1 und Vergleichsbeispiel 2 für die Schadstoffe CO, HC und NOₓ wurden nach Alterung an einem 1,8 l Ottomotor überprüft. Die Alterung erfolgte bei einer Bettemperatur (Temperatur des Katalysators) von 1000°C für die Dauer von 40 Stunden. Die Umsetzungsraten wurden an einem Motorprüfstand bei einer Bettemperatur von 400 °C und unterschiedlichen Luftzahlen λ vermessen. Zur Simulation realer Bedingungen wurde die Luftzahl mit einer Frequenz von 1 Hz und Amplituden von ±0,5 A/F (Air/Fuel-Verhältnis) und ±1,0 A/F moduliert. Die Raumgeschwindigkeit betrug bei diesen Messungen etwa 50000 h⁻¹.

Die Ergebnisse der Messungen sind in den nachfolgenden Tabellen 1 und 2 aufgelistet. Die in den Tabellen wiedergegebenen Meßwerte sind Mittelwerte aus mindestens zwei Messungen.

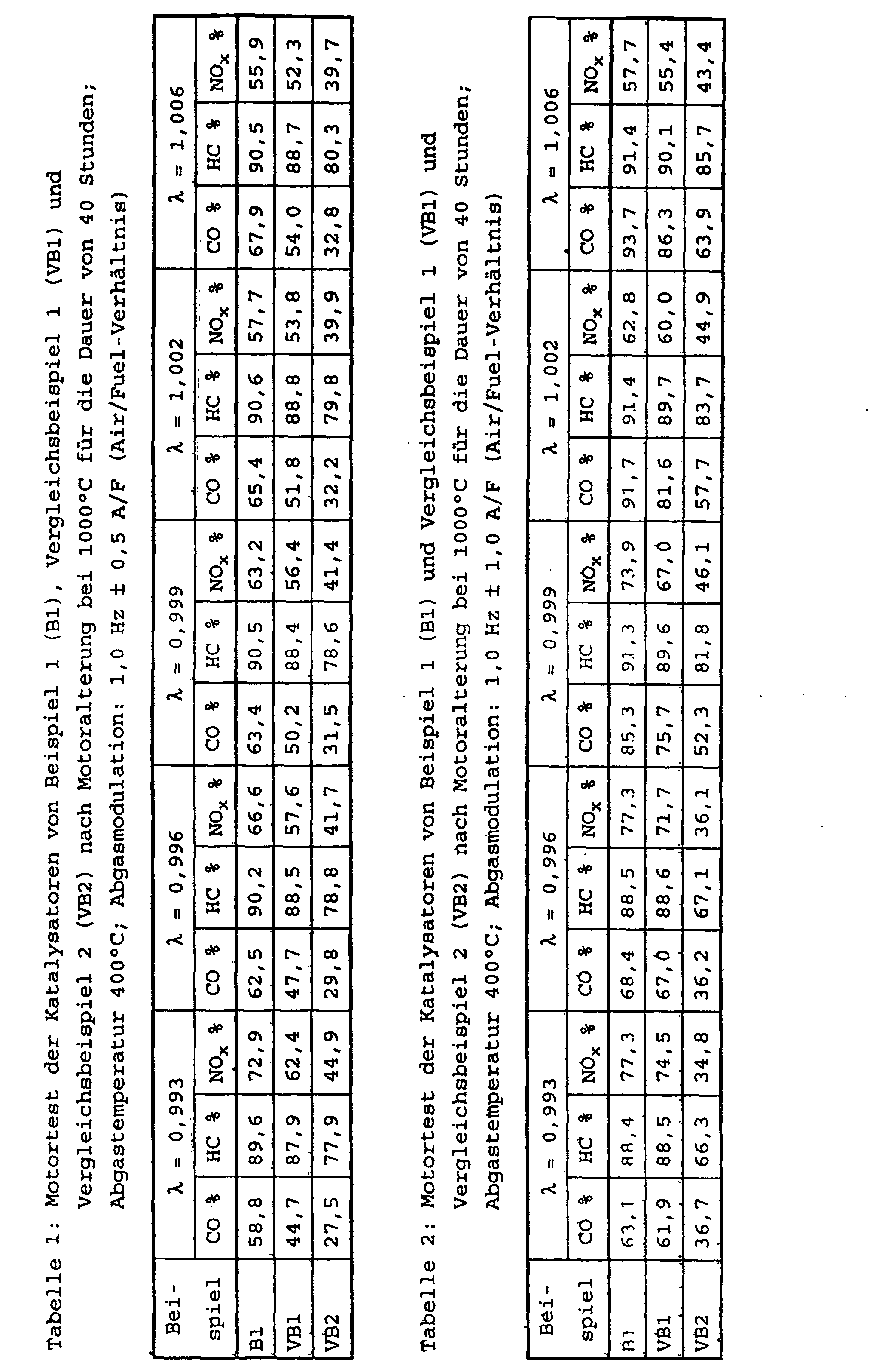

### Beispiel 2:

Es wurde ein weiterer Katalysator gemäß der Erfindung hergestellt. Im Unterschied zu Beispiel 1 wurde das Palladium jedoch nicht durch Imprägnieren in die Beschichtung eingebracht, sondern das Palladiumnitrat wurde schon der Beschichtungsdispersion zugegeben. Die chemische Zusammensetzung des Katalysators war mit der von Beispiel 1 identisch.

### Vergleichsbeispiel 3:

Es wurde ein Tragkörper mit einem zweischichtigen Katalysator gemäß Beispiel 1 aus der WO 95/00235 beschichtet. Die Beschichtungsdispersionen wurden exakt nach den Angaben in der WO-Schrift angefertigt. Die einzelnen Präparationsschritte sind deshalb in dieser Schrift nachlesbar. Die fertige Beschichtung hatte folgende Zusammensetzung:

| 1. Schicht | | 2. Schicht | |
|---|---|---|---|
| Stoff | [g/l] | Stoff | [g/l] |
| γ-Al₂O₃ + | 43 | γ-Al₂O₃ + | 43 |
| Pd | 1,94 | Pd | 1,94 |
| CeO₂ kolloidal | 18,4 | ZrO₂ ex Nitrat | 6,1 |
| CeO₂ ex Nitrat | 30,7 | La₂O₃ ex Nitrat | 6,1 |
| CeO₂/ZrO₂ 20/80 | 30,7 | Nd₂O₃ ex Nitrat | 6,1 |
| ZrO₂ ex Acetat | 8,6 | SrO ex Nitrat | 6,1 |
| La₂O₃ ex Nitrat | 6,1 | | |
| BaO ex Acetat | 3,7 | | |
| NiO | 4,3 | | |
| Summe | 147,44 | Summe | 69,34 |

### Anwendungsbeispiel 2:

Die Umsetzungsraten der Katalysatoren nach Beispiel 2 und Vergleichsbeispiel 3 wurden wie in Anwendungsbeispiel 1 nach Alterung vermessen. In Abweichung von Anwendungsbeispiel 1 wurden die Messungen bei einer Abgastemperatur von 450°C vorgenommen. Die Meßergebnisse sind in den Tabellen 3 und 4 aufgelistet. Sie zeigen, das mit dem erfindungsgemäßen Katalysator die Aufgabe der Erfindung, einen einschichtigen Katalysator mit einfachem Schichtaufbau anzugeben, welcher gleiche oder bessere Leistungsdaten als konventionelle Katalysatoren liefert, voll verwirklicht wird.

### Beispiel 3:

Die Herstellung des Katalysators von Beispiel 2 wurde wiederholt.

### Beispiel 4:

Es wurde ein weiterer, erfindungsgemäßer Katalysator mit etwas geänderten Verhältnissen der Komponenten der Beschichtungsdispersion zueinander analog zu Beispiel 2 hergestellt. Statt des Cer/Zirkon-Mischoxids wurde das mit Praseodymoxyd durch Imprägnierung modifizierte Cer/Zirkon - Mischoxid verwendet. Die Zusammensetzung der fertigen Beschichtung ist der folgenden Aufstellung zu entnehmen:

| Stoff | Konzentration [g/l] |
|---|---|
| La/Al₂O₃ | 100 |
| CeO₂/ZrO₂/Pr₆O₁₁ 67/28/5 | 45 |
| CeO₂ ex Acetat | 20 |
| ZrO₂ ex Acetat | 25 |
| BaO ex Acetat | 20 |
| NiO | 4,3 |
| Pd ex Nitrat | 3,9 |
| Summe | 218,2 |

### Anwendungsbeispiel 3:

Mit den beiden Katalysatoren der Beispiele 3 und 4 wurden nach Alterung dieselben Untersuchungen wie mit den anderen Katalysatoren durchgeführt. Die Meßergebnisse sind in den Tabellen 5 und 6 aufgelistet. In Abweichung von den vorhergehenden Beispielen wurden die Katalysatoren einer schärferen Alterung unterworfen, um die positiven Einflüsse des mit Praseodymoxid modifizierten Cer/Zirkon-Mischoxids auf die Alterungsstabilität des Katalysators aufzuzeigen. Die verschärfte Alterung wurde an einem 2,0 l Ottomotor bei einer Abgastemperatur von 1050°C für die Dauer von 40 Stunden vorgenommen. Die Raumgeschwindigkeit bei der Messung der Umsetzungsraten betrug wieder 50.000 h⁻¹.

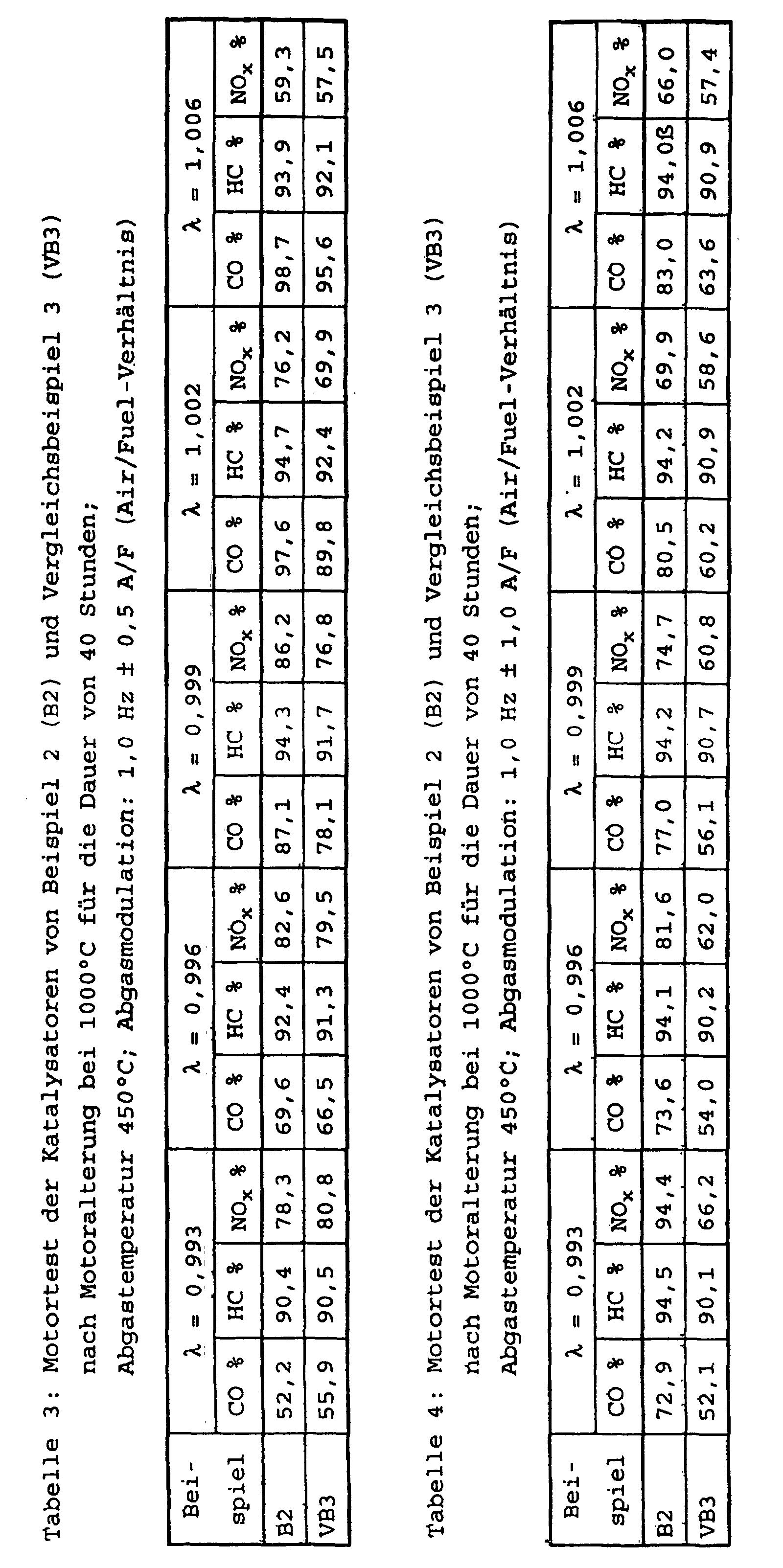

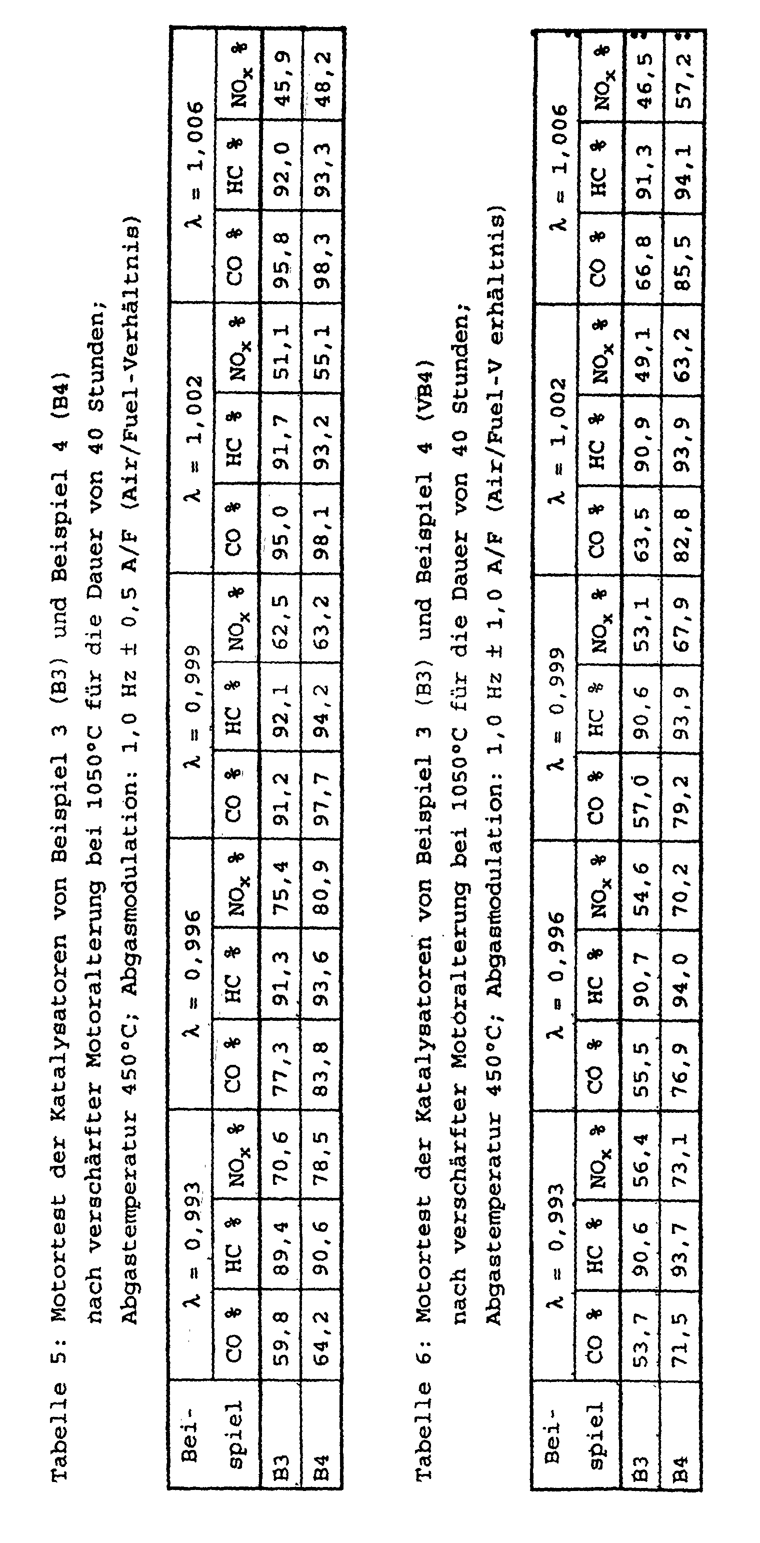

### Beispiel 5:

Es wurde ein weiterer Katalysator wie in Beispiel 4 hergestellt. 20 g des CeO₂/ZrO₂/Pr₆O₁₁ wurden jedoch durch 70 g des zirkonreichen Cer/Zirkon-Mischoxids mit einem Gehalt an Zirkon von 80 Gew.% ersetzt. Hierdurch blieb der Gehalt des Katalysators an CeO₂ nahezu gleich wie in Beispiel 4. Die Herkunft von CeO₂ verteilte sich jetzt auf CeO₂/ZrO₂/Pr₆O₁₁, CeO₂/ZrO₂ (20/80) und hochdisperses Ceroxid. Die Zusammensetzung der fertigen Beschichtung ist der folgenden Aufstellung zu entnehmen:

| Stoff | Konzentration [g/l] |
|---|---|
| La/Al₂O₃ | 100 |
| CeO₂/ZrO₂/Pr₆O₁₁ 67/28/5 | 25 |
| CeO₂/ZrO₂ 20/80 | 70 |
| CeO₂ ex Acetat | 20 |
| ZrO₂ ex Acetat | 25 |
| BaO ex Acetat | 20 |
| NiO | 4,3 |
| Pd ex Nitrat | 3,9 |
| Summe | 268,2 |

### Anwendungsbeispiel 4

Jeweils ein Exemplar eines Katalysators von Beispiel 4 und Beispiel 5 wurden wie in Anwendungsbeispiel 3 einer verschärften Alterung bei 1050°C für die Dauer von 40 Stunden unterzogen. Die Messung der Umsetzungsraten der Katalysatoren wurde bei verdoppelter Raumgeschwindigkeit von 100000 h⁻¹ vorgenommen.

Die Ergebnisse der Messungen sind in den Tabellen 7 und 8 aufgelistet.

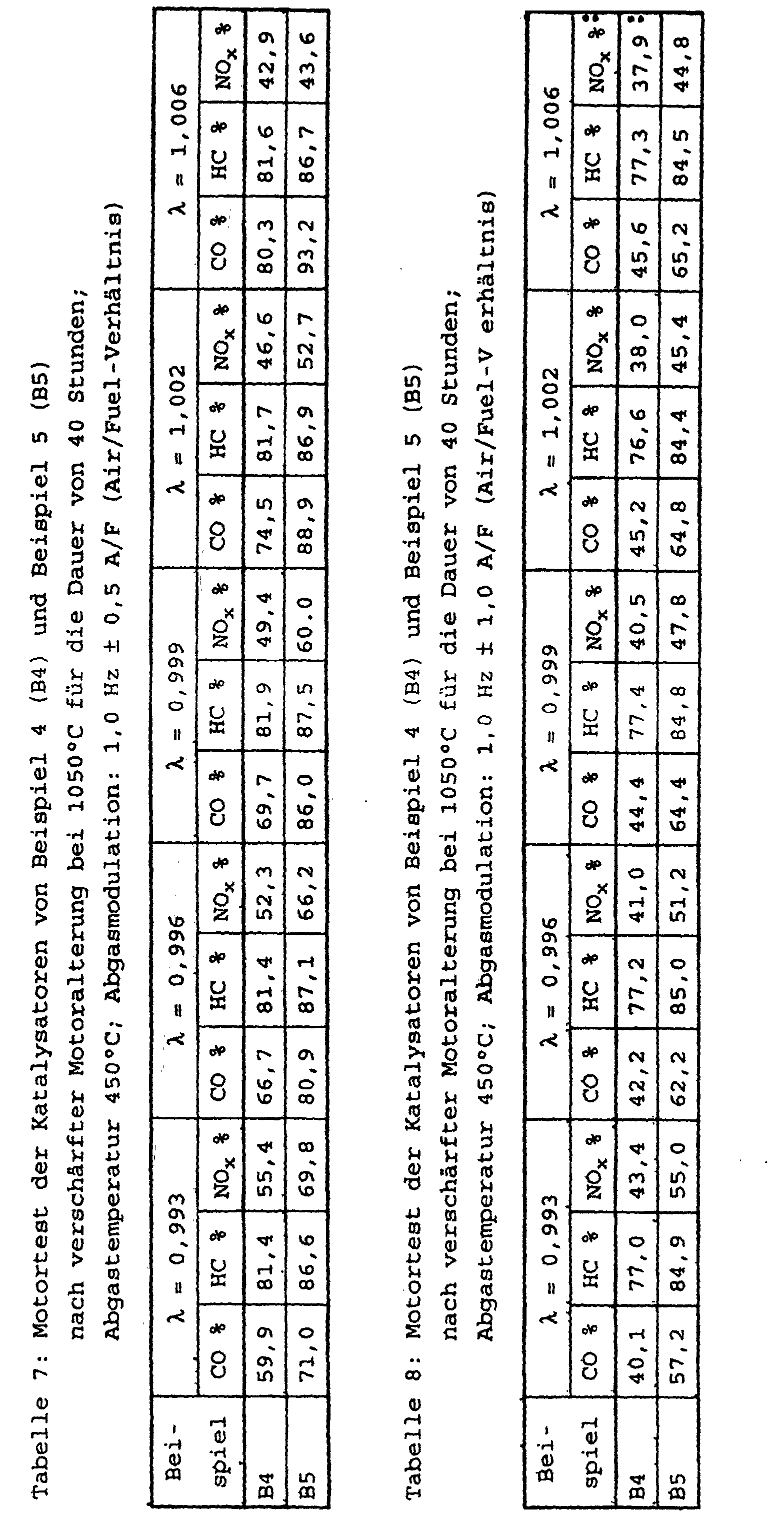

## Patentansprüche

1. Autoabgaskatalysator, enthaltend auf einem inerten Tragkörper eine einschichtige, katalytisch aktive Beschichtung aus
a) feinteiligem, stabilisiertem, aktivem Aluminiumoxid mit einer Korngröße zwischen 1 und etwa 50µm,
b) mindestens einer feinteiligen Sauerstoff speichernden Komponente mit einer Korngröße zwischen 1 und etwa 50µm,
c) sowie zusätzlichem, hochdispersem Ceroxid, Zirkonoxid und Bariumoxid mit einer Kristallitgröße kleiner als 10 nm und
d) als einziges katalytisch aktives Edelmetall Palladium, welches mit allen Komponenten der Beschichtung in engem Kontakt steht,
wobei der Autoabgaskatalysator erhältlich ist durch ein Verfahren umfassend Beschichten des inerten Tragkörpers mit einer wäßrigen Beschichtungsdispersion aus feinteiligem Aluminiumoxid, den feinteiligen Sauerstoff speichernden Komponenten sowie löslichen Ceroxid-, Zirkonoxid- und Bariumoxidvorstufen, Trocknen und ggf. erstmaliges Kalzinieren der Beschichtung und anschließendes Imprägnieren mit löslichen Vorstufen des Palladiums sowie erneutes Trocknen und abschließendes Kalzinieren, oder wobei der Autoabgaskatalysator erhältlich ist durch ein Verfahren umfassend die folgenden Verfahrensstufen:
a) Anfertigen eines Beschichtungspulvers durch Ansetzen einer wäßrigen Dispersion aus feinteiligem Aluminiumoxid, den feinteiligen Sauerstoff speichernden Komponenten sowie löslichem Ceroxid-, Zirkonoxid- und Bariumoxidvorstufen, Entwässern der Dispersion, Trocknen und ggf. erstmaliges Kalzinieren der so erhaltenen Feststoffe,
b) Herstellen einer wäßrigen Beschichtungsdispersion aus dem Beschichtungspulver von Stufe a), Zugeben einer gelösten Vorstufe von Palladium und Beschichten des inerten Tragkörpers mit dieser Dispersion,
c) Trocknen und abschließendes Kalzinieren.

2. Autoabgaskatalysator nach Anspruch 1,
**dadurch gekennzeichnet,**
**daß** aktives Aluminiumoxid, feinteilige Sauerstoff speichernde Komponente, Ceroxid, Zirkonoxid; Bariumoxid und Nickeloxid in einem Massenverhältnis von
100 : 20-100 : 15-40 : 20-40 : 10-30 : 0-10 zueinander stehen.

3. Autoabgaskatalysator nach Anspruch 2,
**dadurch gekennzeichnet,**
**daß** die feinteilige Sauerstoff speichernde Komponente ein Mischoxid aus Cer- und Zirkonoxid mit einem Gehalt an Zirkonoxid von 15 bis 35 Gew.-% Zirkonoxid bezogen auf das Gesamtgewicht der Komponente ist.

4. Autoabgäskatalysator nach Anspruch 2,
**dadurch gekennzeichnet,**
**daß** das Cer/Zirkon-Mischoxid noch mit 1 bis 10 Gew.-% Praseodymoxid modifiziert ist.

5. Autoabgaskatalysator nach Anspruch 4,
**dadurch gekennzeichnet,**
**daß** er als weitere feinteilige, Sauerstoff speichernde Komponente ein zirkonreiches Cer/Zirkon-Mischoxid mit einem Gehalt von 70 bis 90 Gew.-% Zirkon, bezogen auf das Gesamtgewicht der Komponente, und mit einer Korngröße zwischen 1 und etwa 50 µm enthält.

6. Autoabgaskatalysator nach Anspruch 5,
**dadurch gekennzeichnet,**
**daß** die feinteiligen Cer/Zirkon-Mischoxide noch mit jeweils 1 bis 10 Gew.-% Praseodymoxid, bezogen auf das Gesamtgewicht des jeweiligen Mischoxids, modifiziert sind.

7. Autoabgaskatalysator nach Anspruch 2,
**dadurch gekennzeichnet,**
**daß** die feinteilige Sauerstoff speichernde Komponente aus Zirkonoxid besteht, auf dem hochdisperses Ceroxid in einer Menge von 10 bis 30 Gew.-% bezogen auf das Gesamtgewicht der Komponente abgeschieden ist.

8. Autoabgaskatalysator nach Anspruch 7,
**dadurch gekennzeichnet,**
**daß** das hochdisperse Ceroxid 1 bis 20 Gew.-% Praseodymoxid bezogen auf Ceroxid enthält.

9. Verfahren zur Herstellung des Autoabgaskatalysators nach einem der vorstehenden Ansprüche durch Beschichten des inerten Tragkörpers mit einer wäßrigen Beschichtungsdispersion aus feinteiligem Aluminiumoxid, den feinteiligen Sauerstoff speichernden Komponenten sowie löslichen Ceroxid-, Zirkonoxid- und Bariumoxidvorstufen, Trocknen und ggf. erstmaliges Kalzinieren der Beschichtung und anschließendes Imprägnieren mit löslichen Vorstufen des Palladiums sowie erneutes Trocknen und abschließendes Kalzinieren.

10. Verfahren nach Anspruch 9,
**dadurch gekennzeichnet,**
**daß** die wäßrige Beschichtungsdispersion zusätzlich Nickeloxid enthält.

11. Verfahren nach Anspruch 9 oder 10,
**dadurch gekennzeichnet,**
**daß** das erstmalige Kalzinieren unterbleibt.

12. Verfahren nach einem der Ansprüche 9 bis 11,
**dadurch gekennzeichnet,**
**daß** die abschließende Kalzinierung in einem Wasserstoff enthaltenden Gasstrom bei 300 bis 500°C vorgenommen wird.

13. Verfahren zur Herstellung des Autoabgaskatalysators nach einem der Ansprüche 1 bis 8, welches die folgenden Verfahrensstufen aufweist:
a) Anfertigen eines Beschichtungspulvers durch Ansetzen einer wäßrigen Dispersion aus feinteiligem Aluminiumoxid, den feinteiligen Sauerstoff speichernden Komponenten sowie löslichem Ceroxid-, Zirkonoxid- und Bariumoxidvorstufen, Entwässern der Dispersion, Trocknen und ggf. erstmaliges Kalzinieren der so erhaltenen Feststoffe,
b) Herstellen einer wäßrigen Beschichtungsdispersion aus dem Beschichtungspulver von Stufe a),. Zugeben einer gelösten Vorstufe von Palladium und Beschichten des inerten Tragkörpers mit dieser Dispersion,
c) Trocknen und abschließendes Kalzinieren.

14. Verfahren nach Anspruch 13,
**dadurch gekennzeichnet,**
**daß** die wäßrige Dispersion von Verfahrensstufe a) zusätzlich Nickeloxid enthält.

15. Verfahren nach den Ansprüchen 13 oder 14,
**dadurch gekennzeichnet,**
**daß** das erstmalige Kalzinieren unterbleibt.

16. Verfahren nach einem der Ansprüche 13 bis 15,
**dadurch gekennzeichnet,**
**daß** die abschließende Kalzinierung in einem Wasserstoff enthaltenden Gasstrom bei 300 bis 500°C vorgenommen wird.

## Claims

1. A car exhaust catalyst which comprises, on an inert support structure, a single-layered catalytically active coating of:
a) finely divided, stabilised, active aluminium oxide with a particle size between 1 and about 50 µm,
b) at least one finely divided oxygen-storing component with a particle size between 1 and about 50 µm,
c) and additional highly dispersed cerium oxide, zirconium oxide and barium oxide with a crystallite size less than 10 nm and
d) as the only catalytically active noble metal, palladium, which is in close contact with all the components in the coating,
wherein the car exhaust catalyst is obtainable by a process comprising coating the inert support structure with an aqueous coating dispersion of finely divided aluminium oxide, the finely divided oxygen-storing component as well as soluble cerium oxide, zirconium oxide and barium oxide precursors, drying and optionally calcining the coating for a first time and then impregnating with soluble precursors of palladium as well as renewed drying and subsequent calcining,
or wherein the car exhaust catalyst is obtainable by a process comprising the following process steps:
a) producing a coating powder by making up an aqueous dispersion of finely divided aluminium oxide, the finely divided oxygen-storing component as well as soluble cerium oxide, zirconium oxide and barium oxide precursors, dewatering the dispersion, drying and optionally calcining the solid obtained in this way for a first time,
b) preparing an aqueous coating dispersion from the coating powder in step a), adding a dissolved precursor of palladium and coating the inert support structure with this dispersion,
c) drying and subsequently calcining.

2. A car exhaust catalyst according to Claim 1,
**characterised in that**
active aluminium oxide, finely divided oxygen-storing component, cerium oxide, zirconium oxide, barium oxide and nickel oxide are present in a ratio by weight, with respect to each other, of
100 : 20-100 : 15-40 : 20-40 : 10-30 : 0-10.

3. A car exhaust catalyst according to Claim 2,
**characterised in that**
the finely divided oxygen-storing component is a mixed oxide of cerium oxide and zirconium oxide with a concentration of zirconium oxide of 15 to 35 wt.% of zirconium oxide with reference to the total weight of the component.

4. A car exhaust catalyst according to Claim 2,
**characterised in that**
the cerium/zirconium mixed oxide is modified with a further 1 to 10 wt.% of praseodymium oxide.

5. A car exhaust catalyst according to Claim 4,
**characterised in that**
it contains, as a further finely divided, oxygen-storing component, a zirconium-rich cerium/zirconium mixed oxide with a concentration of 70 to 90 wt.% of zirconium, with reference to the total weight of the component, and with a particle size between 1 and about 50 µm.

6. A car exhaust catalyst according to Claim 5,
**characterised in that**
the finely divided cerium/zirconium mixed oxides are each modified with a further 1 to 10 wt.% of praseodymium oxide, with reference to the total weight of the relevant mixed oxide.

7. A car exhaust catalyst according to Claim 2,
**characterised in that**
the finely divided, oxygen-storing component consists of zirconium oxide onto which highly dispersed cerium oxide is deposited in amounts of 10 to 30 wt.%, with reference to the total weight of the component.

8. A car exhaust catalyst according to Claim 7,
**characterised in that**
the highly dispersed cerium oxide contains 1 to 20 wt.% of praseodymium oxide, with reference to the cerium oxide.

9. A process for preparing the car exhaust catalyst according to one of the preceding Claims by coating the inert support structure with an aqueous coating dispersion of finely divided aluminium oxide, the finely divided oxygen-storing component as well as soluble cerium oxide, zirconium oxide and barium oxide precursors, drying and optionally calcining the coating for a first time and then impregnating with soluble precursors of palladium as well as renewed drying and subsequent calcination.

10. A process according to Claim 9,
**characterised in that**
the aqueous coating dispersion also contains nickel oxide.

11. A process according to Claim 9 or 10,
**characterised in that**
the first calcining procedure is omitted.

12. A process according to one of Claims 9 to 11,
**characterised in that**
the subsequent calcination procedure is performed at 300 to 500°C in a hydrogen-containing stream of gas.

13. A process for preparing the car exhaust catalyst according to one of Claims 1 to 8, which comprises the following process steps:
a) producing a coating powder by making up an aqueous dispersion of finely divided aluminium oxide, the finely divided oxygen-storing component as well as soluble cerium oxide, zirconium oxide and barium oxide precursors, dewatering the dispersion, drying and optionally calcining the solid obtained in this way for a first time,
b) preparing an aqueous coating dispersion from the coating powder in stage a), adding a dissolved precursor of palladium and coating the inert support structure with this dispersion,
c) drying and then calcining.

14. A process according to Claim 13,
**characterised in that**
the aqueous dispersion in process step a) also contains nickel oxide.

15. A process according to Claims 13 or 14,
**characterised in that**
the first calcination procedure is omitted.

16. A process according to one of Claims 13 to 15,
**characterised in that**
the subsequent calcination procedure is performed at 300 to 500°C in a hydrogen-containing stream of gas.

## Revendications

1. Catalyseur de gaz d'échappement de véhicules qui présente, sur un corps de support inerte, un revêtement monocouche à action catalytique constitué
a) d'un oxyde d'aluminium actif stabilisé finement divisé d'une granulométrie comprise entre 1 et environ 50 µm,
b) d'au moins un composant finement divisé accumulant l'oxygène d'une granulométrie comprise entre 1 et environ 50 µm,
c) ainsi que d'oxyde de cérium supplémentaire hautement dispersé, d'oxyde de zirconium et d'oxyde de baryum dont la taille des cristallites est inférieure à 10 nm et
d) comme unique métal noble à action catalytique du palladium qui est en contact étroit avec tous les composants du revêtement,
le catalyseur de gaz d'échappement de véhicules pouvant être obtenu à l'aide d'un procédé comportant le revêtement du corps de support inerte avec une dispersion de revêtement aqueuse constituée d'oxyde d'aluminium finement divisé, des composants finement divisés accumulant l'oxygène ainsi que des précurseurs solubles de l'oxyde de cérium, de l'oxyde de zirconium et de l'oxyde de baryum, un séchage et, le cas échéant, une première calcination du revêtement et une imprégnation subséquente avec des précurseurs solubles du palladium ainsi qu'un nouveau séchage et une calcination finale,
ou bien le catalyseur de gaz d'échappement de véhicules pouvant être obtenu à l'aide d'un procédé comportant les étapes suivantes :
a) fabrication d'une poudre de revêtement par la préparation d'une dispersion aqueuse constituée d'oxyde d'aluminium finement divisé, des composants finement divisés accumulant l'oxygène ainsi que de précurseurs solubles de l'oxyde de cérium, de l'oxyde de zirconium et de l'oxyde de baryum, la déshydratation de la dispersion, le séchage et le cas échéant une première calcination des substances solides ainsi obtenues,
b) préparation d'une dispersion de revêtement aqueuse constituée de la poudre de revêtement de l'étape a), addition d'un précurseur dissous de palladium et revêtement du corps de support inerte avec cette dispersion,
c) séchage et calcination finale.

2. Catalyseur de gaz d'échappement de véhicules selon la revendication 1,
**caractérisé en ce que**
l'oxyde d'aluminium actif, le composant finement divisé accumulant l'oxygène, l'oxyde de cérium, l'oxyde de zirconium, l'oxyde de baryum et l'oxyde de nickel présentent un rapport de masse l'un par rapport à l'autre de 100 : 20-100 : 15-40 : 20-40 : 10:30 : 0-10.

3. Catalyseur de gaz d'échappement de véhicules selon la revendication 2,
**caractérisé en ce que**
le composant finement divisé accumulant l'oxygène est un oxyde mixte d'oxyde de cérium et de zirconium d'une teneur en oxyde de zirconium de 15 à 35 % en poids par rapport au poids total du composant.

4. Catalyseur de gaz d'échappement de véhicules selon la revendication 2
**caractérisé en ce que**
l'oxyde mixte de cérium et de zirconium est encore modifié avec 1 à 10 % en poids d'oxyde de praséodyme.

5. Catalyseur de gaz d'échappement de véhicules selon la revendication 4,
**caractérisé en ce que**
il contient, comme autre composant finement divisé accumulant l'oxygène un oxyde mixte de cérium et de zirconium riche en zirconium d'une teneur de 70 à 90 % en poids de zirconium par rapport au poids total du composant et d'une granulométrie comprise entre 1 et environ 50 µm.

6. Catalyseur de gaz d'échappement de véhicules selon la revendication 5,
**caractérisé en ce que**
les oxydes mixtes finement divisés de cérium et de zirconium sont chacun encore modifiés avec 1 à 10 % en poids d'oxyde de praséodyme par rapport au poids total de l'oxyde mixte concerné.

7. Catalyseur de gaz d'échappement de véhicules selon la revendication 2,
**caractérisé en ce que**
le composant finement divisé accumulant l'oxygène est constitué d'oxyde de zirconium sur lequel de l'oxyde de cérium hautement dispersé est séparé dans une quantité de 10 à 30 % en poids par rapport au poids total du composant.

8. Catalyseur de gaz d'échappement de véhicules selon la revendication 7,
**caractérisé en ce que**
l'oxyde de cérium hautement dispersé renferme 1 à 20 % en poids d'oxyde de praséodyme par rapport à l'oxyde de cérium.

9. Procédé de fabrication du catalyseur de gaz d'échappement de véhicules selon l'une quelconque des revendications précédentes par revêtement du corps de support inerte avec une dispersion de revêtement aqueuse constituée d'oxyde d'aluminium finement divisé, de composants finement divisés accumulant l'oxygène ainsi que des précurseurs solubles de l'oxyde de cérium, de l'oxyde de zirconium et de l'oxyde de baryum, séchage et, le cas échéant, une première calcination du revêtement et une imprégnation subséquente avec des précurseurs solubles du palladium ainsi qu'un nouveau séchage et une calcination finale.

10. Procédé selon la revendication 9,
**caractérisé en ce que**
la dispersion de revêtement aqueuse contient en plus de l'oxyde de nickel.

11. Procédé selon la revendication 9 ou 10,
**caractérisé en ce que**
la première calcination n'est pas réalisée.

12. Procédé l'une quelconque des revendications 9 à 11,
**caractérisé en ce que**
la calcination finale est réalisée dans un flux de gaz renfermant de l'hydrogène à une température comprise entre 300 et 500°C.

13. Procédé de fabrication du catalyseur de gaz d'échappement de véhicules selon l'une quelconque des revendications 1 à 8 comportant les étapes suivantes :
a) fabrication d'une poudre de revêtement par la préparation d'une dispersion aqueuse constituée d'oxyde d'aluminium finement divisé, des composants finement divisés accumulant l'oxygène ainsi que de précurseurs solubles d'oxyde de cérium, d'oxyde de zirconium et de baryum, la déshydratation de la dispersion, le séchage et le cas échéant une première calcination des substances solides ainsi obtenues,
b) préparation d'une dispersion de revêtement aqueuse constituée de la poudre de revêtement de l'étape a), addition d'un précurseur dissous de palladium et revêtement du corps de support inerte avec cette dispersion,
c) séchage et calcination finale.

14. Procédé la revendication 13,
**caractérisé en ce que**
la dispersion aqueuse de l'étape a) du procédé renferme en plus de l'oxyde de nickel.

15. Procédé selon les revendications 13 ou 14,
**caractérisé en ce que**
la première calcination n'est pas réalisée.

16. Procédé l'une quelconque des revendications 13 à 15,
**caractérisé en ce que**
la calcination finale est réalisée dans un flux de gaz renfermant de l'hydrogène à une température comprise entre 300 et 500°C.
